# EUROPEAN PATENT SPECIFICATION

(11) **EP 3 804 063 B1**
(45) Date of publication and mention of the grant of the patent: **04.05.2022**
(21) Application number: 19732125.0
(22) Date of filing: 20.05.2019
(51) Int. Cl.: H02G 5/00, H01B 13/10

(54) **METHOD OF MANUFACTURING AN INSULATED BAR ELEMENT FOR A BUSBAR SYSTEM**
VERFAHREN ZUR HERSTELLUNG EINES ISOLIERTEN SCHIENENELEMENTS FÜR EIN SAMMELSCHIENENSYSTEM
PROCÉDÉ DE FABRICATION D'UN ÉLÉMENT DE BARRE ISOLÉE POUR UN SYSTÈME DE BARRE OMNIBUS

(30) Priority: 07.06.2018 IT 201800006119
(43) Date of publication of application: 14.04.2021
(73) Proprietor: BTICINO S.P.A., 21100 Varese (VA) (IT)
(72) Inventor: MEDOLAGO, Alexandre François, 24048 Treviolo (BG) (IT)
(74) Representative: Perani & Partners S.p.A.
(86) International application number: PCT/IB2019/054126
(87) International publication number: WO 2019/234532

(56) References cited:
- WO-A1-03/105301
- WO-A2-2004/057665
- DE-A1-102010 026 011
- US-A- 5 705 773

## Description

### Field of The Invention

The present invention relates to busbar conduits for power distribution, for example in industrial buildings. In particular, the invention relates to the insulation of the bar elements of the busbar conduit.

### Description of the prior art

Busbar conduits comprise a plurality of bar elements which mainly lie side-by-side in a casing. Each bar element comprises a conductive bar whose main portion extends in a straight direction and is substantially flat, with two opposite faces. At the main portions, the faces of the conductive bars are close together and face each other.

Each bar element further comprises a layer of electrically insulating material, e.g. polyethylene terephthalate (PET) in the form of a film that at least partially surrounds the conductive bar. The insulating layer prevents short circuits between the conductive bars, and multiple overlapping insulating layers may be provided for improved insulation.

The main portions of the bar elements are pressed together within the casing with a significant pressure to promote the conduction of heat to the outside of the casing, with the insulating layers interposed between the conductive bars.

The bar elements are spaced apart at bends of the conductive bars, where the main portions terminate, e.g. for series-connection of two busbar conduits or for tap-off connection of power consuming units to the conduit. Such spaced-apart portions may have uninsulated regions thereon, intended for connection. Nevertheless, the insulating layer generally extends well beyond the bends, to the actual connecting areas.

The insulating layer may be associated with its respective conductive bar using a pressure-sensitive adhesive, before or after bending the bar. Where the bars are pressed together, proper positioning of the insulator is ensured. However, in the diverging portions of the bars, the required pressure is exerted by an adhesive tape wrapped around the insulating layer. Namely, the inner surface of the adhesive tape has an adhesive that requires oil-free surfaces to ensure stable fixation to the insulating layer throughout the life of the busbar conduit.

Heating of the insulations for sealing purposes may affect the dielectric properties of the insulating layer. This deterioration shows a high statistic variation which prevents taking low-cost effective preventive measures to preserve the insulator. Damage to the insulating layer may obviously result in loss of power with local overheating and further deterioration, and even short circuits.

DE 102010026011 discloses an alternative type of insulation, wherein rigid custom-preformed caps are fixed over the side edges of the bars, at the areas where these are bent. The caps may be fixed by gluing, but alternatives may be provided, including cable ties.

Nevertheless, the use of rigid caps involves higher costs as compared with traditional insulations, and their function is only ensured if the bending angles of the bars are exactly the same as those provided when forming the caps.

WO 03105301 describes a busbar with a known and common kind of insulation, which is given by warpping the metallic bar in a polyester film before bending the bar where this is required for external connections. The edges of the film are welded by ultrasounds or glue.

US 5705773 describes a boot for enclosing a joint between three busbars. The boot can be held in place with wire ties, which are intended to be removable such that also the boot can be removed for maintenance purposes.

WO 2004057665 describes a busbar conduit where may bars are strapped together at their central straight portion.

### Summary of The Invention

The object of the present invention is to obviate the aforementioned prior art drawbacks, namely to ensure proper positioning of the insulating layer without affecting its insulation properties.

Another object of the invention is to provide effective insulation of the bend portions of the bars, while avoiding the drawbacks associated with custom-preformation of rigid insulating caps.

These and other objects are fulfilled by a method of manufacturing a bar element or a busbar conduit as defined in any of the accompanying claims.

The invention provides a compression member, e.g. a strapping, whose inner surface is unattached to the electrically insulating layer. Therefore, the compression member is tightly secured around the insulating layer without the use of adhesives which would require cleaning and heating, and would lead to reduced performance of the insulating layer.

The insulating layer is preferably applied to the bar, while it is still straight, and is flexible enough to allow bending of the bar as desired after application of the insulation. The insulating layer consists of a common flexible insulating film.

### BRIEF DESCRIPTION OF THE DRA WINGS

The characteristics and advantages of the present invention will result from the following detailed description of a possible practical embodiment, described with reference to some examples in the set of drawings, in which:
- Figure 1 shows a perspective view of a bar element obtainable by a method according to a first embodiment of the invention,
- Figure 2 shows a perspective view of a bar element obtainable by a method according to a second embodiment of the invention,

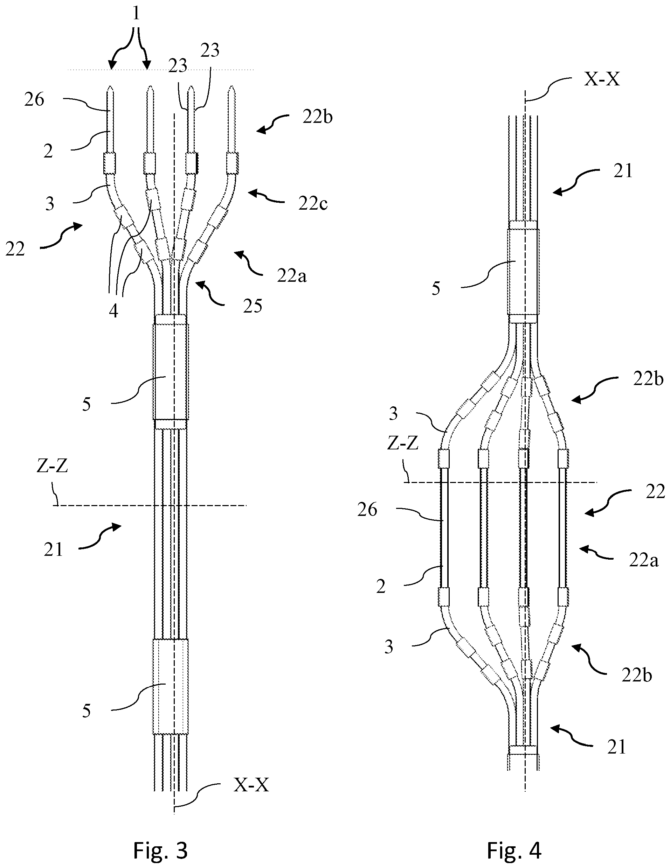

- Figure 3 shows a partial top view of a busbar conduit obtainable by the method of the invention, without the casing,
- Figure 4 shows another partial top view of a busbar conduit obtainable by the method of the invention, without the casing, composed of bar elements such as that of Figure 2,
- Figures 5a to 5e show a sequence of steps for assembling the bar element of Figure 2.

### Detailed Description

Referring to the accompanying figures, a busbar conduit is generally designated by numeral 100. The structural characteristics of the conduit 100 will be now described, and the method of manufacture thereof will be explained later. The claimed invention resides in the while the features of the conduit 100 are given to show an example of product that can be obtained by the mehod.

The busbar conduit 100 comprises a plurality of bar elements 1 and a casing 110. The bar elements 1 extend in a longitudinal direction X-X and are at least partially accommodated in the casing 110. Nevertheless, it will be understood that the bar elements 1 may be also provided individually and separate from the casing 110. Then, a single bar element 1 will be described, to refer to all the bar elements 1.

The bar element 1 comprises a conductive bar 2, which has at least one first portion 21 and one second portion 22. The first portion 21 is substantially straight and mainly extends in the longitudinal direction X-X. The first portions 21 of the distinct conductive bars 2 are arranged close to each other in the casing 110 substantially along their entire longitudinal extent.

More in detail, each conductive bar 2 has two opposite faces 23 extending between side edges 24, which edges are spaced apart in a first direction Y-Y transverse to the longitudinal direction X-X. The faces 23 of the distinct conductive bars 2 face each other at their respective first portions 21. Namely the faces 23 of the distinct conductive bars 2 face each other in a second direction Z-Z that is transverse to the longitudinal direction X-X and to the first transverse direction Y-Y.

The second portion 22 of each conductive bar 2 is connected to the first portion 21 via at least one bend 25 of the conductive bar 2. Preferably, each second portion 22 is divided into an inclined part 22a that is inclined to the longitudinal direction X-X and a parallel part 22b, which extends parallel to the first portion 21, i.e. in the longitudinal direction X-X, but offset to the first portion 21 along the second transverse direction Z-Z. The inclined part 22a and the parallel part 22b are joined together at a bend 22c and the inclined part 22a connects the parallel part 22b to the first portion 21. The inclined parts 22a of the distinct conductive bars 2 are divergent from each other.

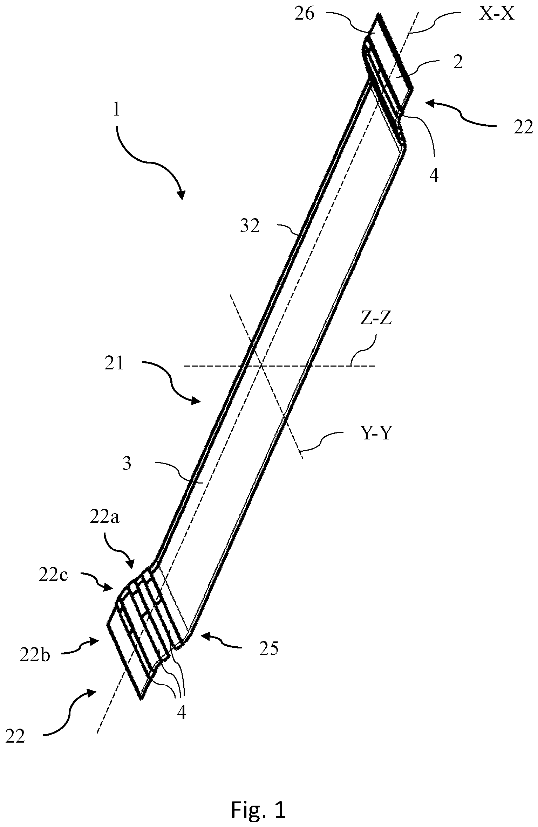

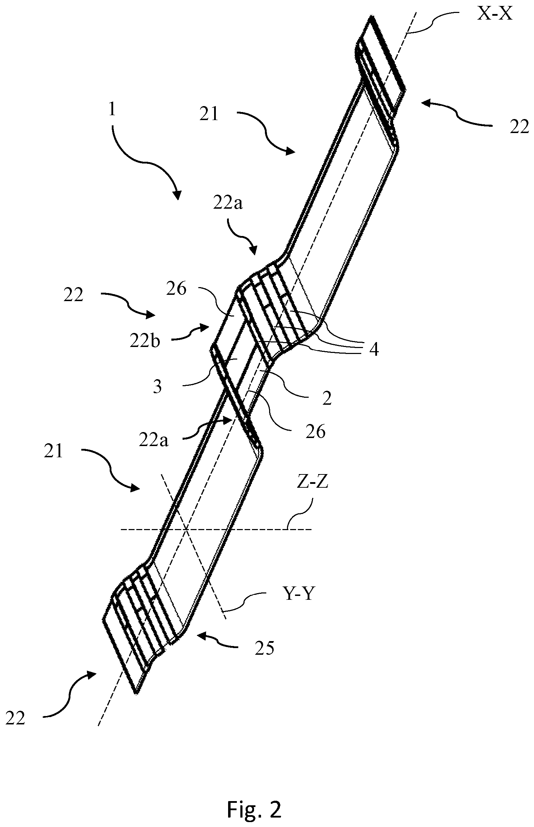

In the embodiment of Figure 1, the conductive bar 2 has two second portions 22, which define the two end portions of the conductive bar 2, spaced apart in the longitudinal direction X-X. In the embodiment of Figure 2, the conductive bar 2 has two first portions 21 and three second portions 22. The latter include the two second portions 22 at the ends of the conductive bar 2, and one second portion 22 connecting the first portions 21 of the conductive bar 2. The connecting second portion 22 has two inclined parts 22a and a parallel part 22b which is parallel to the first portions 21.

The second portions 22 located at the ends are useful for series-connection of two busbar conduits 100, whereas the second portions 22 connecting together two first portions 21 may be used for tap-off connection of a power consuming unit 100 to the busbar conduit 100.

The casing 110 mainly extends in the longitudinal direction X-X, and has side walls 111 arranged around the bar elements 1. The casing 110 also has end openings 112, with the second portions 22 at the ends of the conductive bars 2 projecting therefrom. The casing 110 may also have one or more tap-offs 113 formed in the side walls 111 at the second portions 22 which are arranged to connect the distinct first portions 21 of the conductive bars 2.

Each bar element 1 comprises an electrically insulating layer 3 which at least partially covers a respective conductive bar 2 at the first portion 21 and the second portion 22. In particular, the insulating layer 3 substantially entirely covers the first portions 21, such that it is interposed between the faces 23 of the distinct conductive bars 2 and prevents electrical contact therebetween.

In the preferred embodiment the insulating layer 3 is in the form of a film. The material of the insulating layer 3 may be, for example, polyethylene terephthalate (PET), Mylar, Dacron-Mylar-Dacron (DMD), or mica.

Each second portion 22 generally has at least one exposed region 26, with no insulating material, for connection of external elements. The exposed region 26 is usually placed within the parallel part 22b of the second portion 22.

In any case, the electrically insulating layer 3 at least partially covers the second portions 22, namely the inclined parts 22a and optionally also part of the parallel parts 22b.

The insulating layer 3 is attached to the conductive bar 2 by means of an adhesive material 6, which is a pressure-sensitive adhesive. Preferably each bar element 1 comprises two overlapping electrically insulating layers 3, namely an inner insulating layer 3 wrapped around the conductive bar 2 and an outer insulating layer 3 wrapped around the inner insulating layer 3 inside. Additional adhesive material 6 may be also provided between the two insulating layers 3. Nevertheless, any number of insulating layers 3, as well as one insulating layer 3 wrapped around the conductive bar 2 for multiple turns, may be deemed to be equivalent to a single insulating layer 3, eventually composed of sublayers.

The bar element 1 comprises one or more compression members 4 which surround the insulating layer 3 at the second portion 22, each for one or more turns. The compression member 4 may be, for example, a band, in the preferred embodiment an elastic strapping. The strapping is made of a plastic material such as polypropylene (PP) or polyethylene terephthalate (PET).

It shall be noted that each compression member 4 surrounds a single conductive bar 2, and not a plurality of conductive bars 2 of the busbar conduit 100 at the same time.

Optionally the busbar conduit 100 further comprises one or more well-known bundling elements 5, each surrounding a plurality of bar elements 1 at the first portions 21, by pressing the bar elements 1 one against the other.

Preferably each bar element 1 comprises a plurality of compression members 4, which may be arranged around the second portion 22 in the vicinity of and/or at the bend 22c that connects the inclined part 22a with the parallel part 22b, and/or the bend 25 that connects the first portion 21 with the second portion 22. This is because the bends 22c, 25 are most exposed to degradation of the insulating layer 3. Nevertheless, compression members 4 may be also provided at a distance from the bends 22c, 25 and around the first portion 21 of the conductive bar 2.

Each compression member 4 tightens the electrically insulating layer 3 against the conductive bar 2. More in detail, the compression member 4 is elastically tightened against the electrically insulating layer 3. It shall be noted that when multiple insulating layers 3 are provided, the outer insulating layer 3 is tightened against the conductive bar 2 with the interposition of at least one inner insulating layer 3.

Therefore, the compression member 4 has at least one portion of its inner surface, i.e. the surface that faces the conductive bar 2, in contact with the electrically insulating layer 3. The contact may be firmer at the side edges 24 of the conductive bar 2 and looser and even discontinuous at the faces 23 of the conductive bar 2.

In one aspect of the bar obtainable by the method of the invention, the inner surface of the compression member 4 is unattached to the electrically insulating layer 3. Thus, the compression member 4 is separate from, i.e. independent from the electrically insulating layer 3, although it contacts it. In particular, the inner surface of the compression member 4 has no adhesive material. No heat curing is thus required, which might damage the insulating layer 3.

The compression member 4 is also movable relative to the insulating layer 3. Therefore, the contact between the compression member 4 and the insulating layer 3 may be considered as unstable. In particular, the inner surface of the compression member 4 may be spaced apart from the insulating layer 3 without tearing, at least at the faces 23 of the conductive bar 2. Such separation may be difficult at the side edges 24, due to the elastic tension of the compression member 4.

The compression member 4 is also slidable relative to the insulating layer 3 along the conductive bar 2. This sliding movement may be intended to occur, for example, in the longitudinal direction X-X to fit the compression member 4 in and out, or around the conductive bar 2 with two portions of the compression member 4 sliding in opposite directions along opposite faces 23 of the conductive bar 2, in the first transverse direction Y-Y. A relatively limited sliding movement of a portion of the compression member 4 may be also envisaged, e.g. at one face 23, while other portions of the compression member 4 are stationary, e.g. at the side edges 24.

As no adhesive is present on the inner surface of the compression member 4, the resilience of the compression member 4 facilitates stable placement thereof around the conductive bar 2. Thus, the compression member 4 should be preferably fitted tight, i.e. with interference fit, on the electrically insulating layer 3.

In one embodiment, the compression member 4 has two fixing portions 41, which are, for example, end portions of the compression member 4, and an intermediate portion 42 which connects the fixing portions 41 together. The intermediate portion 42 surrounds the conductive bar 2, whereas the fixing portions 41 are fixed together to maintain the intermediate portion 42 stretched around the inner insulating layer 3. More in detail, the fixing portions 41 may be sealed together or fastened to each other by means of a fastener (not shown), such as a clip that holds the fixing portions 41 against each other.

In case of heat-seal bonding, the fixing portions 41 are at least partly melted together. This may be achieved by directly heating the fixing portions 41 or by indirectly causing it to be heated by friction due to rapid rubbing vibrations between the fixing portions 41. Fixation may also occur by mechanical sealing, in which case the fixing portions 41 are complementarily deformed.

In an alternative embodiment, the compression member 4 has an annular shape. Here, there will be no need to fixing two distinct fixing portions thereof together. Conversely, the compression member 4 is fitted onto the conductive bar 2, outside the insulating layer 3, by expanding it, inserting the conductive bar 2 into the annular shape, and releasing. The resilience of the compression member 4 will allow it to maintain its position.

A method of manufacturing a bar element 1 or a busbar conduit 100 will be now described. First, the method includes providing a substantially straight, i.e. flat, conductive bar 2, having no bends. A next step consists in at least partially covering the conductive bar 2 with an electrically insulating layer 3.

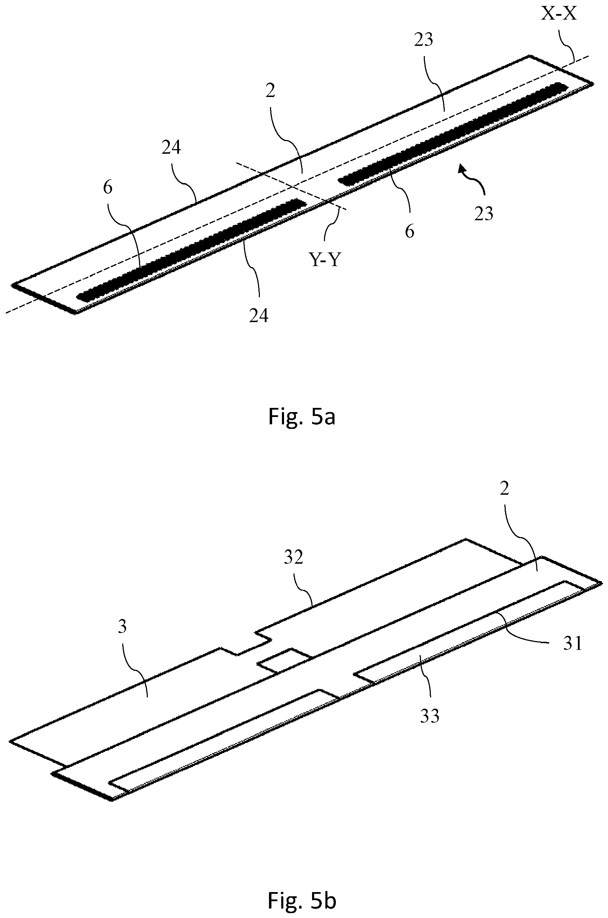

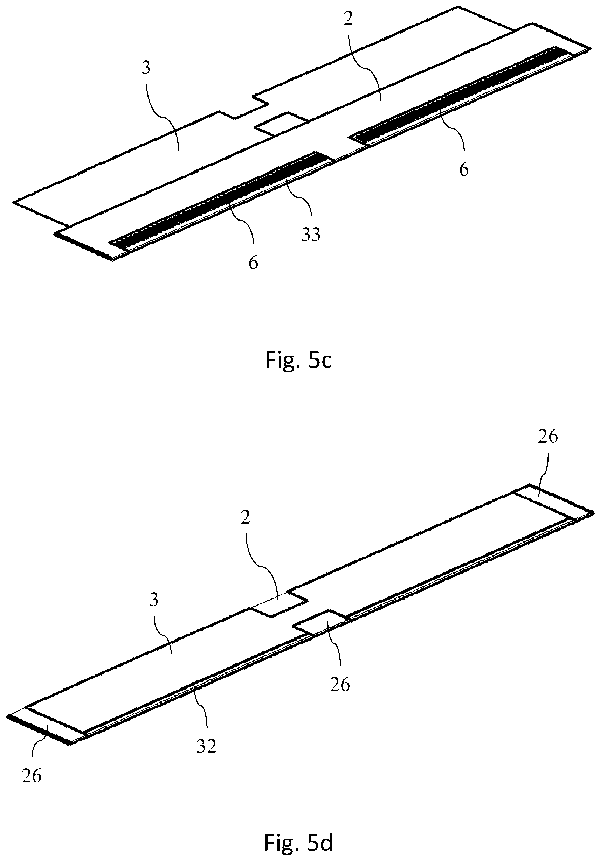

The step of covering includes applying adhesive material 6, which is a pressure-sensitive adhesive, between the conductive bar 2 and the insulating layer 3. More in detail the step of covering may include the following substeps, as shown in Figures 5a-5d:
- attaching a first edge 31 of the insulating layer 3 to the conductive bar 2 by means of adhesive material 6,
- wrapping the insulating layer 3 around the conductive bar 2 at least until a second edge 32 of the insulating layer 3, opposite to the first edge 31, overlaps an underlying portion 33 of the insulating layer 3, and
- attach the second edge 32 to the underlying portion 33 by means of adhesive material 6.

If multiple overlapping insulating layers 3 are provided, then each outer insulating layer 3 may cover an inner insulating layer 3 with similar steps, with obvious changes connected to the fact that the outer insulating layer 3 is attached to the inner insulating layer 3 and not to the conductive bar 2.

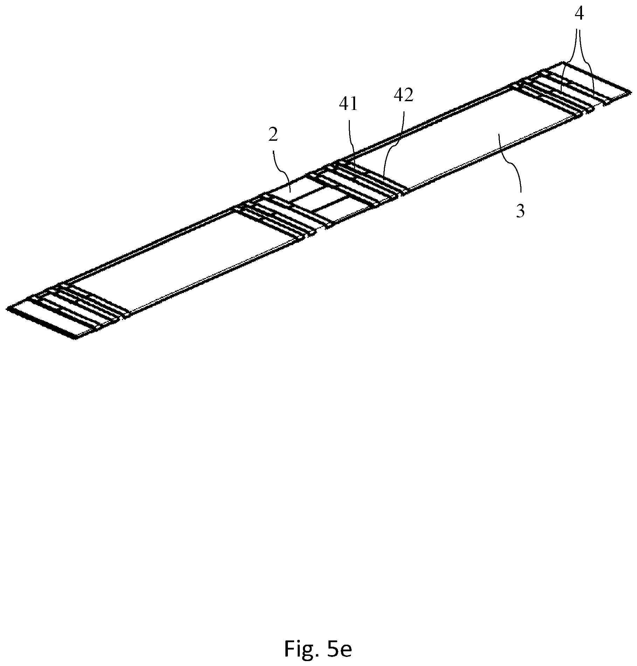

Then the method includes (Figure 5e) surrounding the electrically insulating layer 3 with at least one compression member 4 which tightens the electrically insulating layer 3 against the conductive bar 2, so that the compression member 4 has at least one portion of its inner surface in contact with the electrically insulating layer 3, and the inner surface of the compression member 4 remains unattached to the electrically insulating layer 3.

Optionally the step of surrounding the insulating layer 3 with the compression member 4 comprises surrounding the conductive bar 2 (outside the insulating layer 3) with an intermediate portion 42 of the compression member 4, stretching the compression member 4 thereby overlapping two fixing portions 41 thereof connected to the intermediate portion 42, and fixing together the fixing portions 41. The fixing portions 41, as discussed above, may be bonded together by heat-sealing, vibrations or complementary deformation or may be alternatively fastened together by the application of a fastener.

The method also comprises a step of bending the conductive bar 2, thereby defining at least one substantially rectilinear first portion 21 and one second portion 22 connected to the first portion 21 via at least one bend 25. Preferably, within the second portion 22, an inclined portion 22a which is inclined to the first portion 21, and a parallel portion 22b which is parallel to the first portion 21, are defined and are connected together via a bend 22c.

The step of bending preferably follows the step of surrounding the insulating layer 3 with the compression member 4, provided that, as the first portion 21 and the second portion 22 are defined, at least one compression member 4 shall be located at the second portion 22.

However, the step of bending may also precede the step of covering the conductive bar 2 with the insulating layer 3, or may be provided between the step of covering the conductive bar 2 with the insulating layer 3 and the step of surrounding the insulating layer 3 with the compression member 4. In such cases at least one compression member 4 is placed at the second portion 22.

Once a plurality of bar elements 1 have been formed, a busbar conduit 100 is obtained by the steps of:
- placing the bar elements 1 side-by-side at the first portions 21,
- optionally surrounding the bar elements 1 with one or more bundling elements 5, while pressing the bar elements 1 one against the other at the first portions 21, and
- at least partially inserting the bar elements 1 inside a casing 110.

A skilled person may obviously envisage a number of equivalent changes to the above disclosed embodiments, without departure from the scope of the appended claims.

## Claims

1. A method of manufacturing a bar element (1) for a busbar conduit (100), comprising:
- providing a conductive bar (2), which extends substantially straight in a longitudinal direction X-X,
- at least partially covering the conductive bar (2) with an electrically insulating layer (3) in the form of a flexible insulating film,
- bending the conductive bar (2), thereby defining at least one substantially rectilinear first portion (21) and one second portion (22) connected to the first portion (21) via at least one bend (25),
**characterized in that** it further comprises:
- surrounding the electrically insulating layer (3) with at least one compression member (4), which is elastically tightened against the electrically insulating layer (3) to thereby tighten the electrically insulating layer (3) against the conductive bar (2), so that the compression member (4) has at least one portion of its inner surface in contact with the electrically insulating layer (3), and the inner surface of the compression member (4) remains unattached to the electrically insulating layer (3), the compression member (4) being thereby movable relative to the electrically insulating layer (3),
- wherein the step of covering the conductive bar (2) with the electrically insulating layer (3) comprises applying a pressure-sensitive adhesive between the conductive bar (2) and the insulating layer (3),
- wherein the step of bending the conductive bar (2) is provided after the step of surrounding the insulating layer (3) with the compression member (4) or between the step of covering the conductive bar (2) with the insulating layer (3) and the step of surrounding the insulating layer (3) with the compression member (4), and
- wherein, after the steps of surrounding the electrically insulating layer (3) with at least one compression member (4) and of bending the conductive bar (2), the electrically insulating layer (3) at least partially covers the conductive bar (2) at the first portion (21) and the second portion (22), and the at least one compression member (4) is located at the second portion (22).

2. A method of manufacturing a bar element (1) as claimed in claim 1, wherein the inner surface of the compression member (4) is adapted to be spaced apart from the electrically insulating layer (3).

3. A method of manufacturing a bar element (1) as claimed in claim 1 or 2, wherein the compression member (4) is adapted to slide relative to the electrically insulating layer (3) along the conductive bar (2).

4. A method of manufacturing a bar element (1) as claimed in any of claims 1 to 3, wherein the inner surface of the compression member (4) is free of any adhesive material.

5. A method of manufacturing a bar element (1) as claimed in any of claims 1 to 4, wherein the compression member (4) is a band.

6. A method of manufacturing a bar element (1) as claimed in any claim 1 to 5, wherein the step of surrounding the insulating layer (3) with the compression member (4) comprises surrounding the conductive bar (2), outside the insulating layer (3), with an intermediate portion (42) of the compression member (4), stretching the compression member (4) thereby overlapping two fixing portions (41) therefof connected to the intermediate portion (42), and fixing together the fixing portions (41).

7. A method of manufacturing a busbar conduit (100), comprising:
- manufacturing a plurality of bar elements (1) with a method as claimed in any of claims 1 to 6, and
- placing the bar elements (1) side-by-side at the first portions (21), and
- at least partially inserting the bar elements (1) inside a casing (110),
wherein the first portions (21) of the conductive bars (2) of the bar elements (1) are arranged closed to each other within the housing (110), and the second portions (22) of the conductive bars (2) of the bar elements (1) comprise respective mutually diverging inclined parts (22a).

## Patentansprüche

1. Verfahren zur Herstellung eines Schienenelements (1) für eine Stromschienenleitung (100), umfassend:
- Bereitstellen einer leitenden Schiene (2), die sich im Wesentlichen gerade in einer Längsrichtung X-X erstreckt,
- zumindest teilweises Bedecken der leitenden Schiene (2) mit einer elektrisch isolierenden Schicht (3) in Form eines flexiblen Isolierfilms,
- Biegen der leitenden Schiene (2), wodurch mindestens ein im Wesentlichen geradliniger erster Abschnitt (21) und ein zweiter Abschnitt (22) gebildet wird, der mit dem ersten Abschnitt (21) über mindestens eine Biegung (25) verbunden ist,
**dadurch gekennzeichnet, dass** es ferner umfasst:
- Umgeben der elektrisch isolierenden Schicht (3) mit mindestens einem Kompressionselement (4), das elastisch gegen die elektrisch isolierende Schicht (3) gespannt wird, um dadurch die elektrisch isolierende Schicht (3) gegen die leitende Schiene (2) zu spannen, so dass das Kompressionselement (4) mindestens einen Teil seiner Innenfläche in Kontakt mit der elektrisch isolierenden Schicht (3) hat und die Innenfläche des Kompressionselements (4) nicht an der elektrisch isolierenden Schicht (3) befestigt bleibt, wobei das Kompressionselement (4) dadurch relativ zu der elektrisch isolierenden Schicht (3) beweglich ist,
- wobei die Stufe des Abdeckens der leitenden Schiene (2) mit der elektrisch isolierenden Schicht (3) das Aufbringen eines druckempfindlichen Klebers zwischen der leitenden Schiene (2) und der isolierenden Schicht (3) umfasst,
- wobei die Stufe des Biegens der leitenden Schiene (2) nach der Stufe des Umschließens der isolierenden Schicht (3) mit dem Kompressionselement (4) oder zwischen der Stufe des Bedeckens der leitenden Schiene (2) mit der isolierenden Schicht (3) und der Stufe des Umschließens der isolierenden Schicht (3) mit dem Kompressionselement (4) vorgesehen ist, und
- wobei nach den Stufen des Umschließens der elektrisch isolierenden Schicht (3) mit mindestens einem Kompressionselement (4) und des Biegens der leitenden Schiene (2) die elektrisch isolierende Schicht (3) die leitende Schiene (2) an dem ersten Abschnitt (21) und dem zweiten Abschnitt (22) zumindest teilweise bedeckt und das mindestens eine Kompressionselement (4) an dem zweiten Abschnitt (22) angeordnet ist.

2. Verfahren zur Herstellung eines Schienenelements (1) nach Anspruch 1, bei dem die Innenfläche des Kompressionselements (4) so ausgebildet ist, dass sie von der elektrisch isolierenden Schicht (3) beabstandet ist.

3. Verfahren zur Herstellung eines Schienenelements (1) nach Anspruch 1 oder 2, bei dem das Kompressionselement (4) relativ zu der elektrisch isolierenden Schicht (3) entlang der leitenden Schiene (2) schiebbar ist.

4. Verfahren zur Herstellung eines Schienenelements (1) nach einem der Ansprüche 1 bis 3, wobei die Innenfläche des Kompressionselements (4) frei von jeglichem Klebematerial ist.

5. Verfahren zur Herstellung eines Schienenelements (1) nach einem der Ansprüche 1 bis 4, wobei das Kompressionselement (4) ein Band ist.

6. Verfahren zur Herstellung eines Schienenelements (1) nach einem der Ansprüche 1 bis 5, wobei die Stufe des Umschließens der isolierenden Schicht (3) mit dem Kompressionselement (4) das Umschließen der leitenden Schiene (2) außerhalb der isolierenden Schicht (3) mit einem Zwischenabschnitt (42) des Kompressionselements (4), das Dehnen des Kompressionselements (4), wodurch zwei Befestigungsabschnitte (41) desselben, die mit dem Zwischenabschnitt (42) verbunden sind, überlappt werden, und das gemeinsame Befestigen der Befestigungsabschnitte (41) umfasst.

7. Verfahren zur Herstellung einer Stromschienenleitung (100), umfassend:
- Herstellen einer Vielzahl von Schienenelementen (1) mit einem Verfahren nach einem der Ansprüche 1 bis 6, und
- Anordnen der Schienenelemente (1) Seite an Seite an den ersten Abschnitten (21), und
- zumindest teilweises Einsetzen der Schienenelemente (1) in ein Gehäuse (110), wobei die ersten Abschnitte (21) der leitenden Schienen (2) der Schienenelemente (1) innerhalb des Gehäuses (110) geschlossen zueinander angeordnet sind, und die zweiten Abschnitte (22) der leitenden Schienen (2) der Schienenelemente (1) jeweils zueinander divergierende schräge Teile (22a) aufweisen.

## Revendications

1. Procédé de fabrication d'un élément de barre (1) pour un conduit de barre omnibus (100), consistant à :
- fournir une barre conductrice (2), qui s'étend sensiblement de façon rectiligne dans une direction longitudinale X-X,
- recouvrir au moins partiellement la barre conductrice (2) d'une couche électriquement isolante (3) sous la forme d'un film isolant flexible,
- plier la barre conductrice (2), définissant ainsi au moins une première partie sensiblement rectiligne (21) et une seconde partie (22) reliée à la première partie (21) par l'intermédiaire d'au moins un coude (25),
**caractérisé en ce qu'**il consiste en outre à :
- entourer la couche électriquement isolante (3) avec au moins un élément de compression (4), qui est serré élastiquement contre la couche électriquement isolante (3) pour serrer ainsi la couche électriquement isolante (3) contre la barre conductrice (2), de sorte que l'élément de compression (4) ait au moins une partie de sa surface intérieure en contact avec la couche électriquement isolante (3), et la surface intérieure de l'élément de compression (4) reste non fixée à la couche électriquement isolante (3), l'élément de compression (4) étant ainsi mobile par rapport à la couche électriquement isolante (3),
- dans lequel l'étape consistant à recouvrir la barre conductrice (2) avec la couche électriquement isolante (3) comprend l'application d'un adhésif sensible à la pression entre la barre conductrice (2) et la couche isolante (3),
- dans lequel l'étape consistant à plier la barre conductrice (2) est prévue après l'étape consistant à entourer la couche isolante (3) avec l'élément de compression (4) ou entre l'étape consistant à recouvrir la barre conductrice (2) avec la couche isolante (3) et l'étape consistant à entourer la couche isolante (3) avec l'élément de compression (4), et
- dans lequel, après les étapes consistant à entourer la couche électriquement isolante (3) avec au moins un élément de compression (4) et à plier la barre conductrice (2), la couche électriquement isolante (3) recouvre au moins partiellement la barre conductrice (2) au niveau de la première partie (21) et de la seconde partie (22), et l'au moins un élément de compression (4) est situé au niveau de la seconde partie (22).

2. Procédé de fabrication d'un élément de barre (1) selon la revendication 1, dans lequel la surface intérieure de l'élément de compression (4) est adaptée pour être espacée de la couche électriquement isolante (3).

3. Procédé de fabrication d'un élément de barre (1) selon la revendication 1 ou 2, dans lequel l'élément de compression (4) est adapté pour coulisser par rapport à la couche électriquement isolante (3) le long de la barre conductrice (2).

4. Procédé de fabrication d'un élément de barre (1) selon l'une quelconque des revendications 1 à 3, dans lequel la surface intérieure de l'élément de compression (4) est exempte de tout matériau adhésif.

5. Procédé de fabrication d'un élément de barre (1) selon l'une quelconque des revendications 1 à 4, dans lequel l'élément de compression (4) est une bande.

6. Procédé de fabrication d'un élément de barre (1) selon l'une quelconque des revendications 1 à 5, dans lequel l'étape consistant à entourer la couche isolante (3) avec l'élément de compression (4) comprend les étapes consistant à entourer la barre conductrice (2), à l'extérieur de la couche isolante (3), avec une partie intermédiaire (42) de l'élément de compression (4), à étirer l'élément de compression (4) en superposant ainsi deux parties de fixation (41) reliées de celui-ci à la partie intermédiaire (42), et à fixer ensemble les parties de fixation (41).

7. Procédé de fabrication d'un conduit de barre omnibus (100), consistant à :
- fabriquer une pluralité d'éléments de barre (1) avec un procédé selon l'une quelconque des revendications 1 à 6, et
- placer les éléments de barre (1) côte à côte au niveau des premières parties (21), et
- insérer au moins partiellement les éléments de barre (1) à l'intérieur d'un boîtier (110), dans lequel les premières parties (21) des barres conductrices (2) des éléments de barre (1) sont agencées de manière fermée l'une par rapport à l'autre à l'intérieur du boîtier (110), et les secondes parties (22) des barres conductrices (2) des éléments de barre (1) comprennent des parties inclinées respectives mutuellement divergentes (22a).
